# DEMANDE DE BREVET EUROPEEN

(11) **EP 4 169 424 A1**
(43) Date de publication de la demande: **26.04.2023**
(21) Numéro de dépôt: 22201724.6
(22) Date de dépôt: 14.10.2022
(51) Int. Cl.: A47J 37/06

(54) **APPAREIL DE CUISSON PAR CIRCULATION D' AIR CHAUD VENTILE ET/OU DE GRILLAGE D' ALIMENTS**

(30) Priorité: 21.10.2021 FR 2111158
(71) Demandeur: SEB S.A., 69130 Ecully (FR)
(72) Inventeur: PETITALLOT, Johann, 69134 Ecully Cedex (FR)
(74) Mandataire: SEB Développement

(57) **Abrégé**

L'invention concerne un appareil (1) de cuisson, lequel comprend un dispositif de chauffe (9) destiné à être placé en regard d'une enceinte de cuisson (7), et un organe de ventilation (13) agencé pour générer un flux d'air chaud, le flux d'air chaud étant chauffé par ledit dispositif de chauffe, caractérisé en ce que le dispositif de chauffe (9) comprend un premier organe de chauffe (17) et un deuxième organe de chauffe (19), ledit appareil (1) comprenant une unité de traitement configurée pour proposer un mode de fonctionnement de l'appareil de cuisson dans lequel au moins un parmi le premier organe de chauffe (17) et le deuxième organe de chauffe (19), et l'organe de ventilation (13) sont activés simultanément pour réaliser une fonction de cuisson des aliments disposés dans l'enceinte de cuisson (7), et pour proposer un autre mode de fonctionnement dans lequel seulement un parmi le premier organe de chauffe (17) ou le deuxième organe de chauffe (19) est activé pour réaliser une fonction de grillage ou de dorage des aliments disposés dans l'enceinte de cuisson, l'organe de ventilation (13) étant désactivé.

## Description

### Domaine technique

La présente invention concerne un appareil de cuisson multifonction, permettant de réaliser soit une cuisson d'aliments par circulation d'air chaud ventilé dans une enceinte de cuisson contenant les aliments, soit un grillage d'aliments placés dans l'enceinte de cuisson, voire une combinaison des deux, c'est-à-dire une cuisson d'aliments par circulation d'air chaud ventilé suivie d'un grillage en surface desdits aliments en fin de cuisson.

L'invention porte tout particulièrement sur la conception du dispositif de chauffe permettant de réaliser la cuisson et/ou le grillage des aliments. On entend par grillage le fait de griller ou de gratiner les aliments en surface.

### Etat de la technique

Il existe des appareils de cuisson permettant une cuisson par circulation d'air chaud ventilé, par exemple ceux commercialisés par la demanderesse sous la dénomination ACTIFRY^{®} ou sous la dénomination FRY DELIGHT^{®}. De tels appareils comprennent une enceinte de cuisson dans laquelle est placée une cuve qui permet la réception d'aliments à cuisiner soit en les plaçant directement dans la cuve, soit en les plaçant dans un panier amovible disposé dans ladite cuve. Ces appareils comprennent en partie supérieure, au-dessus de l'enceinte de cuisson, une turbine entraînée en rotation par un moteur placé au-dessus de ladite turbine, un organe de chauffe de type résistif étant placé sous la turbine. Un circuit d'air permet de faire circuler de l'air sous l'action de la turbine, cet air passant par l'organe de chauffe afin d'être chauffé, ledit air chaud circulant dans l'enceinte de cuisson et cuisant les aliments dans la cuve ou le panier. Les calories générées par l'organe de chauffe sont diffusées dans toute l'enceinte de cuisson, ce qui permet un équilibre entre la puissance générée par l'organe de chauffe et le débit d'air de la turbine, l'organe de chauffe conservant ainsi une température de surface qui ne génère pas trop de rayonnements, ce qui évite de griller les aliments placés en surface dans la cuve ou le panier.

De tels appareils ne permettent pas de proposer une fonction de grillage avec une parfaite maîtrise de la cuisson. En effet, si l'objectif était d'avoir une fonction de grillage permettant de griller ou de dorer la surface des aliments en fin de cuisson, la pleine puissance de l'organe de chauffe sans aucune ventilation serait trop importante pour ces appareils qui seraient alors en surchauffe, puisque ledit organe de chauffe est adapté pour la réalisation de cuisson par une circulation d'air chaud ventilé. Il en résulterait une carbonisation des aliments placés en surface dans la cuve ou dans le panier placé dans cette cuve. En outre, cette surchauffe pourrait endommager des composants électroniques et électriques de l'appareil tels que la carte électronique de l'unité de traitement et le moteur de l'organe de ventilation

### Exposé de l'invention

L'invention pallie tout ou partie de ces inconvénients en mettant en oeuvre un appareil de cuisson conçu aussi bien pour cuire des aliments par une circulation d'air chaud ventilé que pour griller ou gratiner des aliments en surface placés dans une enceinte de cuisson.

A cet effet, l'appareil de cuisson selon l'invention comprend un dispositif de chauffe destiné à être placé en regard d'une enceinte de cuisson, et un organe de ventilation agencé pour générer un flux d'air chaud, le flux d'air chaud étant chauffé par ledit dispositif de chauffe. Selon l'invention, le dispositif de chauffe comprend un premier organe de chauffe et un deuxième organe de chauffe. Ainsi, le premier et le deuxième organe de chauffage sont compris dans un seul et même dispositif de chauffage. En outre, l'appareil comprend une unité de traitement configurée pour proposer un mode de fonctionnement de l'appareil de cuisson dans lequel au moins un parmi le premier organe de chauffe et le deuxième organe de chauffe, et l'organe de ventilation sont activés simultanément pour réaliser une fonction de cuisson des aliments disposés dans l'enceinte de cuisson, et pour proposer un autre mode de fonctionnement dans lequel seulement un parmi le premier organe de chauffe ou le deuxième organe de chauffe est activé pour réaliser une fonction de grillage ou de dorage des aliments disposés dans l'enceinte de cuisson, l'organe de ventilation étant désactivé.

Ainsi, l'unité de traitement peut piloter indépendamment les deux organes de chauffe sur le dispositif de chauffe et l'organe de ventilation, ce qui permet une meilleure maîtrise du rayonnement de chaleur au-dessus de l'enceinte de cuisson soit pour une cuisson par circulation d'air chaud ventilé en actionnant simultanément un ou les deux organes de chauffe et l'organe de ventilation de manière à générer des calories qui sont diffusées dans toute l'enceinte de cuisson et à maintenir un équilibre entre les calories générées et le débit d'air, permettant ainsi de conserver une température de surface des deux organes de chauffe qui n'engendre pas trop de rayonnement, soit pour une fonction de grillage en actionnant un seul des deux organes de chauffe de sorte qu'en pleine puissance, ledit organe de chauffe actionné sans débit d'air (organe de ventilation inactif) génère un rayonnement moins important que le rayonnement généré par le premier organe de chauffe et le deuxième organe de chauffe réunis, mais suffisant pour griller en surface les aliments dans l'enceinte de cuisson sans les carboniser et sans occasionner de surchauffe de l'appareil.

Cette invention va donc à l'encontre de ce qui se pratique habituellement pour réaliser une fonction de grillage ou de dorage où généralement tous les organes de chauffe sont activés.

Ainsi, l'appareil pourra offrir des possibilités de cuisson diverses et variées avec de l'air chaud ventilé, adaptées aux aliments à cuisiner, aux recettes mises en oeuvre et aux types de cuisson désirés, selon l'actionnement du premier organe de chauffe et/ou du deuxième organe de chauffe avec l'organe de ventilation.

L'appareil selon l'invention disposera également ainsi de deux modes de fonctionnement en grillage, soit en actionnant seul le premier organe de chauffe soit en actionnant seul le deuxième organe de chauffe, le rayonnement généré par le premier organe de chauffe et celui généré par le deuxième organe de chauffe, pris isolément, sans activer l'organe de ventilation, offrant la possibilité de griller ou de gratiner en surface les aliments dans l'enceinte de cuisson selon deux rayonnements différents, sans les carboniser et sans occasionner de surchauffe de l'appareil.

Selon une réalisation de l'appareil objet de l'invention, le premier organe de chauffe et le deuxième organe de chauffe sont disposés dans un même plan sous l'organe de ventilation. En variante de réalisation, le premier organe de chauffe et le deuxième organe de chauffe peuvent être disposés dans deux plans distincts sous l'organe de ventilation.

Selon l'appareil objet de l'invention, le premier organe de chauffe comprend une puissance comprise entre 500 Watts et 1000 Watts, de préférence comprise entre 700 Watts et 900 Watts de préférence égale à 750 ou 900 Watts.

Selon l'appareil objet de l'invention, le deuxième organe de chauffe comprend une puissance comprise entre 500 Watts et 1000 Watts, de préférence comprise entre 600 Watts et 800 Watts de préférence égale à 600 ou 750 Watts.

Selon une réalisation de l'appareil objet de l'invention, le deuxième organe de chauffe a une puissance inférieure ou égale à la puissance du premier organe de chauffe.

Selon l'appareil objet de l'invention, la puissance totale du premier organe de chauffe et du deuxième organe de chauffe réunis, c'est-à-dire fonctionnant simultanément, est comprise entre 1000 Watts et 2000 Watts, de préférence comprise entre 1300 Watts et 1700 Watts, de préférence égale à 1350 ou 1650 Watts.

Selon l'appareil objet de l'invention, le premier organe de chauffe comprend un premier tube chauffant résistif et le deuxième organe de chauffe comprend un deuxième tube chauffant résistif, le premier tube chauffant résistif et le deuxième tube chauffant résistif étant imbriqués l'un dans l'autre. Plusieurs imbrications seront possibles, ce qui permettra avantageusement d'adapter au plus juste le rayonnement du premier tube chauffant résistif et celui du deuxième tube chauffant résistif.

En outre, ledit appareil peut comprendre l'enceinte de cuisson. Dans ce cas un tel appareil de cuisson peut être du type appareil de cuisson à air chaud ou un four.

L'appareil de cuisson selon l'invention peut également être un accessoire de cuisson dépourvu d'enceinte de cuisson et comprenant des moyens d'appui destinés à interagir avec des moyens de support disposés sur un rebord d'une enceinte de cuisson d'un autre appareil.

La présente invention a également pour objet un procédé de cuisson mis en œuvre par un appareil de cuisson tel que décrit précédemment, et comprenant un mode de fonctionnement dans lequel au moins un parmi le premier organe de chauffe et le deuxième organe de chauffe, et l'organe de ventilation sont activés simultanément pour réaliser une fonction de cuisson des aliments disposés dans l'enceinte de cuisson, suivi d'un autre mode de fonctionnement dans lequel seulement un parmi le premier organe de chauffe ou le deuxième organe de chauffe est activé et l'organe de ventilation est désactivé pour réaliser une fonction de grillage ou de dorage des aliments disposés dans l'enceinte de cuisson.

### Brève description des figures

Les caractéristiques et avantages de l'invention apparaîtront à la lecture de la description suivante s'appuyant sur des figures, parmi lesquelles :
La figure 1 illustre en coupe un exemple de conception d'un appareil de cuisson selon l'invention ;
La figure 2 illustre une réalisation d'un dispositif de chauffe sur l'appareil de cuisson objet de l'invention ;
La figure 3 schématise un premier agencement d'un premier tube chauffant résistif et d'un deuxième tube chauffant résistif constituant un dispositif de chauffe sur l'appareil de cuisson objet de l'invention ;
La figure 4 schématise un deuxième agencement d'un premier tube chauffant résistif et d'un deuxième tube chauffant résistif constituant un dispositif de chauffe sur l'appareil de cuisson objet de l'invention ;
La figure 5 schématise un troisième agencement d'un premier tube chauffant résistif et d'un deuxième tube chauffant résistif constituant un dispositif de chauffe sur l'appareil de cuisson objet de l'invention ;
La figure 6 schématise un quatrième agencement d'un premier tube chauffant résistif et d'un deuxième tube chauffant résistif constituant un dispositif de chauffe sur l'appareil de cuisson objet de l'invention.
La figure 7 schématise un quatrième agencement d'un premier tube chauffant résistif et d'un deuxième tube chauffant résistif constituant un dispositif de chauffe sur l'appareil de cuisson objet de l'invention.
La figure 8 schématise l'électronique de l'appareil illustré à la figure 1.

### Description détaillée de l'invention

Dans la suite de la description, le terme appareil désigne l'appareil de cuisson objet de l'invention, sauf indication dans le texte.

Les termes « supérieur », « inférieur », « haut », « bas », « avant », « arrière », « latéral », « vertical », « horizontal », « gauche », « droite » qui pourraient être utilisés dans la présente description, le seront en considération de la position normale des éléments de l'appareil placé dans une configuration fonctionnelle, face à l'utilisateur sur un plan de support horizontal tel qu'une table ou un plan de cuisine.

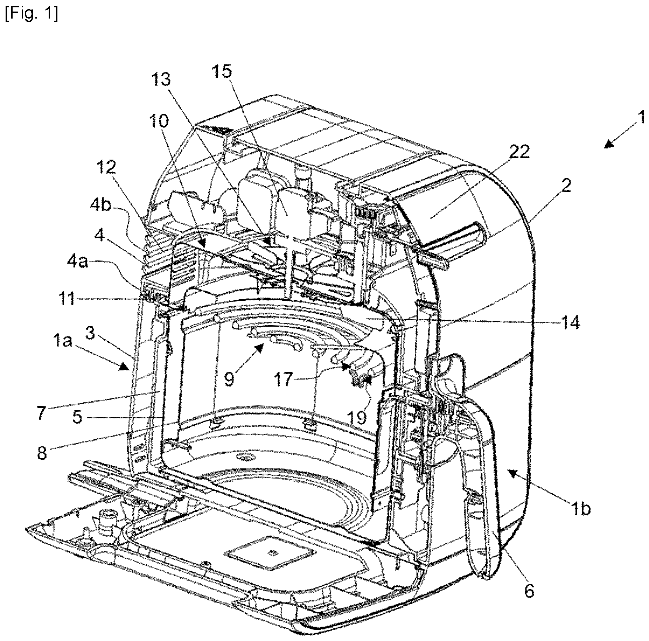

La figure 1 montre un exemple de conception d'un appareil 1 selon l'invention. Cet appareil est du type appareil de cuisson à air chaud, lequel comprend une face arrière 1a et une face avant 1b. L'appareil 1 comporte une coque 2 dont une paroi 3, disposée du côté de la face arrière 1a, est munie d'une grille 4. La coque 2 est ouverte du côté de la face avant 1b et permet l'insertion d'une cuve 5 à la manière d'un tiroir, ladite cuve 5 étant amovible et manipulée au moyen d'une poignée de manipulation 6. La coque 2 définit une enceinte de cuisson 7 qui permet la réception de la cuve 5, un panier 8 étant placé de manière amovible dans cette cuve 5. Les aliments à cuisiner peuvent être disposés soit dans le panier 8 soit directement dans la cuve 5, selon le type de préparation culinaire.

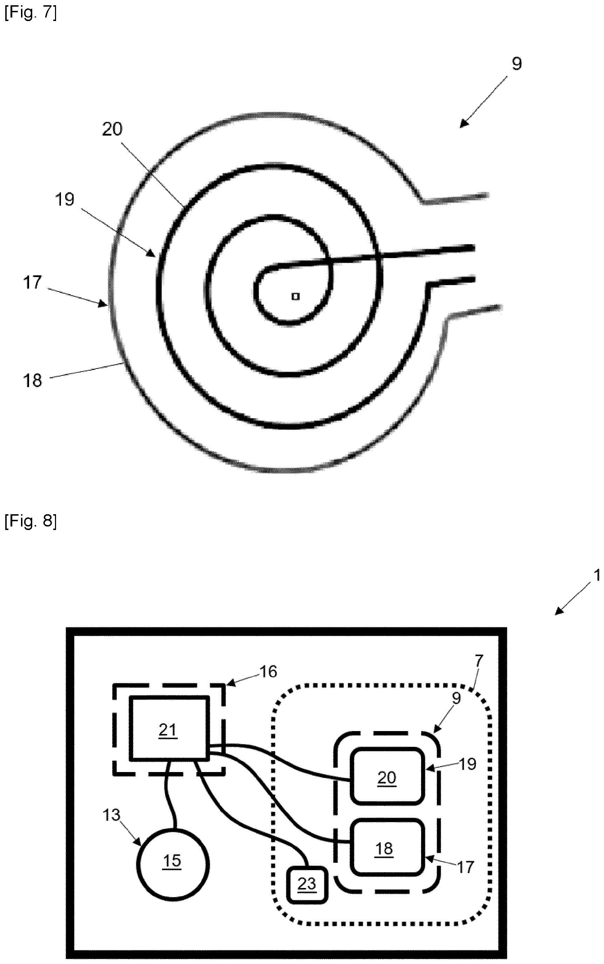

Au regard de la figure 1, un dispositif de chauffe 9 est agencé à l'intérieur de la coque 2, au-dessus de l'enceinte de cuisson 7. Un dispositif de circulation d'air 10 permet d'aspirer de l'air frais au travers d'une partie inférieure 4a de la grille 4, cet air frais pénétrant par une bouche d'aspiration 11 puis étant acheminé vers le dispositif de chauffe 9 afin d'être chauffé et, enfin, vers la cuve 5 disposée dans l'enceinte de cuisson 7. L'air chauffé circule dans la cuve 5 comprenant éventuellement le panier 8, puis est ensuite refoulé à l'extérieur de l'appareil 1, par une bouche d'extraction 12 qui débouche en partie supérieure 4b de la grille 4. Le dispositif de circulation d'air 10 comprend un organe de ventilation 13 comprenant une turbine 14 entraînée en rotation par un moteur 15 électrique ; l'organe de ventilation 13 permet d'acheminer l'air depuis son entrée par la bouche d'aspiration 11 jusqu'à sa sortie par la bouche d'extraction 12. Les divers organes électriques de l'appareil 1, dont le dispositif de chauffe 9 et le moteur 15 sont raccordés à une unité de traitement 16 (schématisée en figure 8), laquelle comporte une carte électronique 21 programmée permettant de contrôler le dispositif de chauffe 9 et le moteur 15.

L'invention trouve également à être appliquée dans d'autres types d'appareils de cuisson comme ceux commercialisés par la demanderesse sous la dénomination ACTIFRY^{®} ou d'accessoires comme celui commercialisé sous l'appellation commerciale Extra Crisp pour l'appareil commercialisé par la demanderesse sous la dénomination Cookeo^{®}.

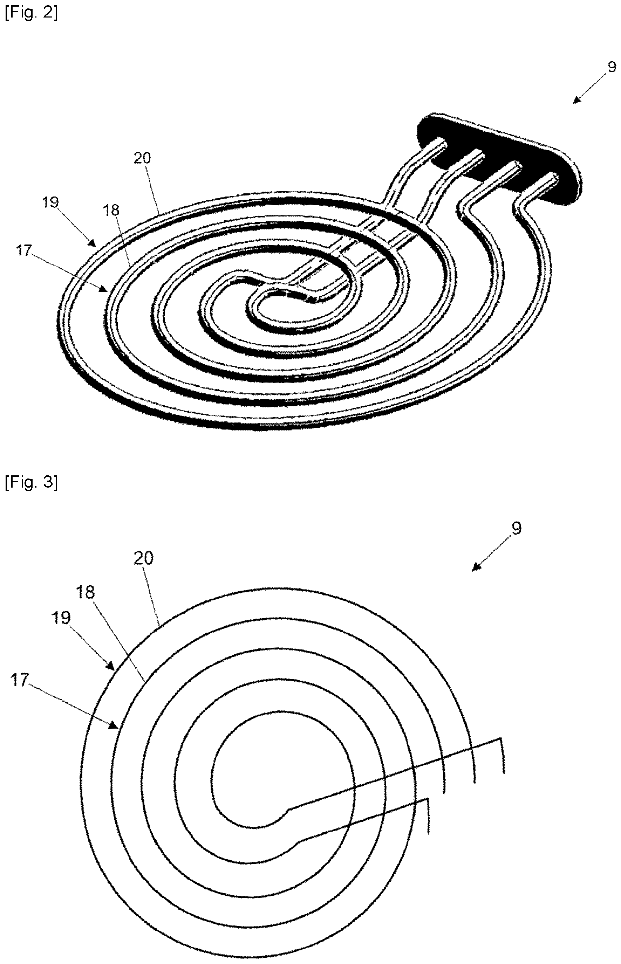

L'invention porte plus spécifiquement sur la conception du dispositif de chauffe 9 et sur l'unité de traitement 16 gérant la commande dudit dispositif de chauffe 9 et du moteur 15 de l'organe de ventilation 13. Selon l'invention, tel que l'illustrent les figures 2 à 7, le dispositif de chauffe 9 comprend un premier organe de chauffe 17 constitué d'un premier tube chauffant résistif 18 et un deuxième organe de chauffe 19 constitué d'un deuxième tube chauffant résistif 20. Le premier tube chauffant résistif 18 et le deuxième tube chauffant résistif 20 sont imbriqués l'un dans l'autre et disposés dans un même plan, avec différentes configurations illustrées sur les figures 3 à 7. Le premier tube chauffant résistif 18 et le deuxième tube chauffant résistif 20 sont de préférence d'une conception identique, c'est-à-dire qu'ils sont conçus dans le même matériau et présentent une section de tube identique et une résistivité identique, seules variant la disposition et éventuellement les longueurs des deux tubes chauffants résistifs 18, 20.

Sur la figure 3, le premier tube chauffant résistif 18 et le deuxième tube chauffant résistif 20 sont placés l'un à côté de l'autre et enroulés en spirale. Le deuxième tube chauffant résistif 20 est placé du côté externe par rapport au premier tube chauffant résistif 18 et dispose donc d'une plus grande longueur de tube que le premier tube chauffant résistif 18. Le premier tube chauffant résistif 18 présente ainsi une puissance supérieure à celle du deuxième tube chauffant résistif 20.

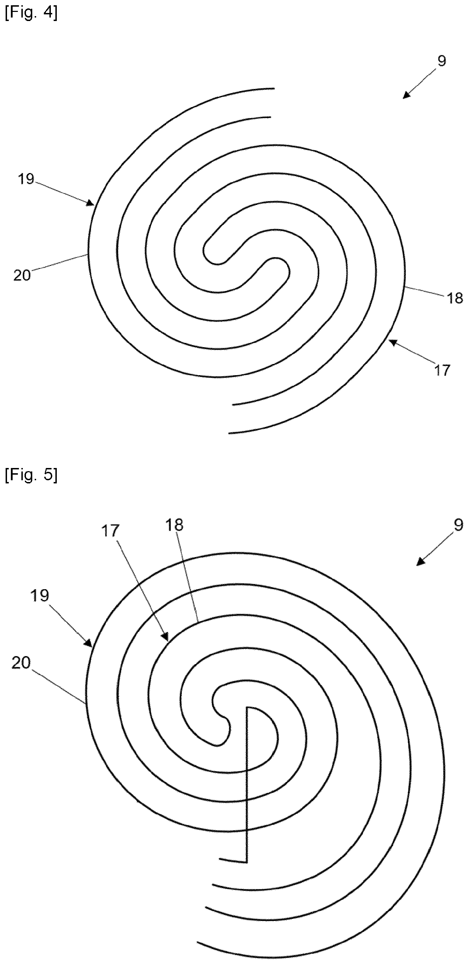

Sur la figure 4, le premier tube chauffant résistif 18 et le deuxième tube chauffant résistif 20 sont repliés chacun sur eux-mêmes, puis ils sont enroulés l'un sur l'autre en sens opposés à la manière de deux escargots. Le premier tube chauffant résistif 18 et le deuxième tube chauffant résistif 20 disposent plus ou moins d'une même longueur de tube. Ainsi, le premier tube chauffant résistif 18 présente une puissance identique à celle du deuxième tube chauffant résistif 20.

Sur la figure 5, le deuxième tube chauffant résistif 20 est replié sur lui-même puis disposé à côté du premier tube chauffant résistif 18, puis ils sont enroulés l'un sur l'autre dans un même sens, en spirale. Le deuxième tube chauffant résistif 20 dispose donc plus ou moins d'une longueur double de celle du premier tube chauffant résistif 18. Ainsi, le premier tube chauffant résistif 18 présente une puissance qui est le double de celle du deuxième tube chauffant résistif 20.

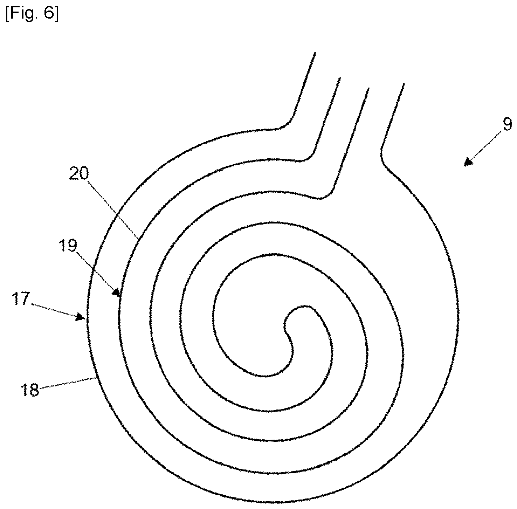

Sur la figure 6, le deuxième tube chauffant résistif 20 est replié sur lui-même puis il est enroulé en spirale. Le premier tube chauffant résistif 18 est disposé en cercle autour du deuxième tube chauffant résistif 20. Le deuxième tube chauffant résistif 20 dispose donc d'une longueur de l'ordre de trois fois celle du premier tube chauffant résistif 18. Ainsi, le premier tube chauffant résistif 18 présente une puissance qui est de l'ordre de trois fois celle du deuxième tube chauffant résistif 20.

Sur la figure 7, le deuxième tube chauffant résistif 20 est enroulé en spirale. Le premier tube chauffant résistif 18 est disposé en cercle autour du deuxième tube chauffant résistif 20. Le deuxième tube chauffant résistif 20 dispose donc d'une longueur de l'ordre de deux fois celle du premier tube chauffant résistif 18. Ainsi, le premier tube chauffant résistif 18 présente une puissance qui est de l'ordre de deux fois celle du deuxième tube chauffant résistif 20. Cette configuration présente l'avantage d'être plus facile à fabriquer.

Les figures 3 à 7 montrent ainsi de manière non limitative diverses possibilités d'imbrication du premier tube chauffant résistif 18 et du deuxième tube chauffant résistif 20 afin de jouer sur leurs longueurs et ainsi sur leurs puissances respectives. Il serait possible de disposer le premier tube chauffant résistif 18 dans un plan décalé en dessous de celui du deuxième tube chauffant résistif 20, notamment pour positionner le premier tube chauffant résistif 18 plus proche de la surface des aliments placés dans la cuve ou le panier et améliorer ainsi la fonction de grillage lors de l'activation seule dudit premier tube chauffant résistif 18.

Tel que schématisé sur la figure 8, l'unité de traitement 16 comprend une carte électronique 21 qui est programmée pour gérer l'activation du premier tube chauffant résistif 18, du deuxième tube chauffant résistif 20 et du moteur 15 de l'organe de ventilation 13 en fonction de la préparation culinaire qui sera sélectionnée par l'utilisateur sur une interface (non illustrée) placée en façade 22 de l'appareil 1.

Selon une première version de base de l'appareil 1, la carte électronique 21 est programmée pour mettre en œuvre les modes de fonctionnement suivants :
- lorsque l'utilisateur sélectionne une recette culinaire nécessitant une cuisson par circulation d'air chaud ventilé, alors l'appareil bascule dans un premier mode de fonctionnement dans lequel la carte électronique 21 actionne simultanément le premier tube chauffant résistif 18, le deuxième tube chauffant résistif 20 et le moteur 15 entraînant la turbine 14 de manière à créer une circulation d'air qui est chauffé par les deux tubes chauffants résistifs 18, 20 ;
- lorsque l'utilisateur sélectionne une recette culinaire nécessitant de griller ou de gratiner en surface les aliments en fin de cuisson, alors l'appareil bascule dans un deuxième mode de fonctionnement dans lequel la carte électronique 21 actionne uniquement le premier tube chauffant résistif 18, le deuxième tube chauffant résistif 20 et le moteur 15 étant inactifs, de manière à créer un rayonnement de chaleur capable de dorer la surface des aliments disposés dans la cuve ou dans le panier ;
- lorsque l'utilisateur sélectionne une recette culinaire nécessitant une cuisson par circulation d'air chaud ventilé puis de griller ou gratiner en surface les aliments en fin de cuisson, alors l'appareil bascule dans son premier mode de fonctionnement dans lequel la carte électronique 21 actionne d'abord simultanément le premier tube chauffant résistif 18, le deuxième tube chauffant résistif 20 et le moteur 15 entraînant la turbine 14 afin de réaliser la cuisson par circulation d'air chaud ventilé puis, en fin de cuisson, bascule dans son deuxième mode de fonctionnement dans lequel ladite carte électronique 21 actionne uniquement le premier tube chauffant résistif 18, le deuxième tube chauffant résistif 20 et le moteur 15 étant inactifs, afin de réaliser le dorage de la surface des aliments disposés dans la cuve ou dans le panier.

Une sonde de température 23 (schématisée figure 8) permet de mesurer la température dans l'enceinte de cuisson 7, la mesure de température étant communiquée à la carte électronique 21 qui gère l'activation desdits tubes chauffants résistifs 18, 20 pour réguler la température dans l'enceinte de cuisson 7. La régulation de température est du type « Tout ou Rien ».

Selon une deuxième version de l'appareil 1, reprenant la première version précitée, la carte électronique 21 est programmée pour mettre en œuvre en complément le mode de fonctionnement suivant : lorsque l'utilisateur sélectionne une recette culinaire nécessitant une cuisson par circulation d'air chaud ventilé avec une température plus douce, alors l'appareil bascule dans un troisième mode de fonctionnement dans lequel la carte électronique 21 actionne simultanément le premier tube chauffant résistif 18 et le moteur 15 entraînant la turbine 14 de manière à créer une circulation d'air qui est chauffé par le premier tube chauffant résistif 18, le deuxième tube chauffant résistif 20 restant inactif.

Selon une troisième version de l'appareil 1 reprenant la première version précitée et éventuellement la deuxième version précitée, la carte électronique 21 est programmée pour mettre en œuvre en complément le mode de fonctionnement suivant : lorsque l'utilisateur sélectionne une recette culinaire nécessitant une cuisson par circulation d'air chaud ventilé avec une température plus douce et différente de celle de la deuxième version, alors l'appareil bascule dans un quatrième mode de fonctionnement dans lequel la carte électronique 21 actionne simultanément le deuxième tube chauffant résistif 20 et le moteur 15 entraînant la turbine 14 de manière à créer une circulation d'air qui est chauffé par le deuxième tube chauffant résistif 20, le premier tube chauffant résistif 18 restant inactif.

Selon une quatrième version de l'appareil 1, reprenant la première version précitée et éventuellement la deuxième version précitée et/ou la troisième version précitée, la carte électronique 21 est programmée pour mettre en œuvre en complément les modes de fonctionnement suivants :
- lorsque l'utilisateur sélectionne une recette culinaire nécessitant de griller, dorer ou de gratiner en surface les aliments, alors l'appareil bascule dans un cinquième mode de fonctionnement dans lequel la carte électronique 21 actionne uniquement le deuxième tube chauffant résistif 20, le premier tube chauffant résistif 18 et le moteur 15 étant inactifs, de manière à créer avec le deuxième tube chauffant résistif 20 un rayonnement de chaleur sur les aliments disposés dans la cuve ou dans le panier, plus faible que le rayonnement de chaleur généré par le premier tube chauffant résistif 18 lorsqu'il fonctionne seul, on peut ainsi avoir deux niveaux de dorage,
- lorsque l'utilisateur sélectionne une recette culinaire nécessitant une cuisson par circulation d'air chaud ventilé puis de griller ou gratiner en surface les aliments en fin de cuisson, alors l'appareil bascule dans son premier, troisième ou quatrième mode de fonctionnement dans lequel la carte électronique 21 actionne d'abord simultanément le premier tube chauffant résistif 18 et/ou le deuxième tube chauffant résistif 20 et le moteur 15 entraînant la turbine 14 - selon la version mise en œuvre de l'appareil 1 et la température de cuisson nécessaire dans l'enceinte de cuisson 7, puis, en fin de cuisson, bascule dans son cinquième mode de fonctionnement dans lequel ladite carte électronique 21 actionne uniquement le deuxième tube chauffant résistif 20, le premier tube chauffant résistif 18 et le moteur 15 étant inactifs.

Ainsi, l'appareil 1 peut réaliser des grillades voire des gratins en utilisant deux rayonnements différents selon la nature des aliments qui sont placés dans la cuve 5, soit en allumant seul le premier tube chauffant résistif 18 dans son deuxième mode de fonctionnement, soit en allumant seul le deuxième tube chauffant résistif 20 dans son cinquième mode de fonctionnement.

L'ensemble de ces versions d'appareils sont ainsi agencés pour mettre en œuvre un procédé de cuisson comprenant une première étape de cuisson suivie d'une deuxième étape de dorage. Les étapes de cuisson peuvent être mises en œuvre au cours du premier, troisième ou quatrième mode de fonctionnement dans lequel au moins un parmi les deux tubes chauffants résistifs 18, 20 ainsi que le moteur 15 entraînant la turbine 14 sont simultanément actionnés. Les étapes de dorage peuvent quant à elles être mises en œuvre au cours du deuxième ou du cinquième mode de fonctionnement dans lequel un seul parmi les deux tubes chauffants résistifs 18, 20 est actionné et le moteur 15 entraînant la turbine 14 est inactif.

Un mode ventilé avec une seule des deux résistances permet également de réguler plus facilement les basses températures sans dépassement important de consigne, par exemple 40°C pour des yaourts ou 100°C pour une cuisson lente, notamment d'une durée de 7 heures pour la cuisson de l'agneau.

Le premier tube chauffant résistif 18 est dimensionné pour délivrer une puissance comprise entre 500 Watts et 1000 Watts, de préférence comprise entre 700 Watts et 900 Watts de préférence égale à 750 ou 900 Watts. De même, le deuxième tube chauffant résistif 20 est dimensionné pour délivrer une puissance comprise entre 500 Watts et 1000 Watts, de préférence comprise entre 600 Watts et 800 Watts de préférence égale à 600 ou 750 Watts. Le premier tube chauffant résistif 18 et le deuxième tube chauffant résistif 20 sont dimensionnés pour délivrer ensemble une puissance comprise entre 1000 Watts et 2000 Watts, de préférence comprise entre 1300 Watts et 1700 Watts, de préférence égale à 1350 ou 1650 Watts, selon la capacité d'aliments que pourra recevoir la cuve 5 de l'appareil 1.

L'appareil 1 pourra comporter divers accessoires complémentaires qui seront utilisés lors d'une cuisson par circulation d'air chaud ventilé et/ou lors d'une cuisson par grillage en surface des aliments. Par exemple, l'appareil 1 peut comporter une pale (non illustrée) permettant de racler l'intérieur de la cuve 5 et de brasser les aliments dans ladite cuve 5, ladite pale pouvant être utilisée avec une cuisson par circulation d'air chaud ventilé et/ou avec une cuisson par grillage. L'appareil 1 peut aussi comporter un support (non illustré) se posant sur le contour supérieur de la cuve 5 ou du panier 8 placé dans cette cuve 5, ledit support permettant la réception de piques à brochette (non illustrées), ledit appareil 1 travaillant alors en mode de grillage.

D'autres caractéristiques restent envisageables dans le cadre de l'invention.

## Revendications

1. Appareil (1) de cuisson, lequel comprend un dispositif de chauffe (9) destiné à être placé en regard d'une enceinte de cuisson (7), et un organe de ventilation (13) agencé pour générer un flux d'air chaud, le flux d'air chaud étant chauffé par ledit dispositif de chauffe, **caractérisé en ce que** le dispositif de chauffe (9) comprend un premier organe de chauffe (17) et un deuxième organe de chauffe (19), ledit appareil (1) comprenant une unité de traitement (16) configurée pour proposer un mode de fonctionnement de l'appareil de cuisson dans lequel au moins un parmi le premier organe de chauffe (17) et le deuxième organe de chauffe (19), et l'organe de ventilation (13) sont activés simultanément pour réaliser une fonction de cuisson des aliments disposés dans l'enceinte de cuisson, et pour proposer un autre mode de fonctionnement dans lequel seulement un parmi le premier organe de chauffe (17) ou le deuxième organe de chauffe (19) est activé pour réaliser une fonction de grillage ou de dorage des aliments disposés dans l'enceinte de cuisson (7), l'organe de ventilation (13) étant désactivé.

2. Appareil (1) selon la revendication 1, dans lequel le premier organe de chauffe (17) et le deuxième organe de chauffe (19) sont disposés dans un même plan sous l'organe de ventilation (13).

3. Appareil (1) selon l'une quelconque des revendications 1 ou 2, dans lequel le premier organe de chauffe (17) comprend une puissance comprise entre 500 Watts et 1000 Watts, de préférence comprise entre 700 Watts et 900 Watts de préférence égale à 750 ou 900 Watts.

4. Appareil (1) selon l'une quelconque des revendications 1 à 3, dans lequel le deuxième organe de chauffe (19) comprend une puissance comprise entre 500 Watts et 1000 Watts, de préférence comprise entre 600 Watts et 800 Watts de préférence égale à 600 ou 750 Watts.

5. Appareil (1) selon l'une quelconque des revendications 1 à 4, dans lequel le deuxième organe de chauffe (19) a une puissance inférieure ou égale à la puissance du premier organe de chauffe (17).

6. Appareil (1) selon l'une quelconque des revendications 1 à 5, dans lequel la puissance totale du premier organe de chauffe (17) et du deuxième organe de chauffe (19) réunis est comprise entre 1000 Watts et 2000 Watts, de préférence comprise entre 1300 Watts et 1700 Watts, de préférence égale à 1350 ou 1650 Watts.

7. Appareil (1) selon l'une quelconque des revendications 1 à 6, dans lequel le premier organe de chauffe (17) comprend un premier tube chauffant résistif (18) et le deuxième organe de chauffe (19) comprend un deuxième tube chauffant résistif (20), le premier tube chauffant résistif (18) et le deuxième tube chauffant résistif (20) étant imbriqués l'un dans l'autre.

8. Appareil selon l'une des revendications 1 à 7, comprenant l'enceinte de cuisson.

9. Appareil selon l'une des revendications 1 à 7, dans lequel ledit appareil est un accessoire de cuisson dépourvu d'enceinte de cuisson et comprenant des moyens d'appui destinés à interagir avec des moyens de support disposés sur un rebord d'une enceinte de cuisson d'un autre apparei l.

10. Procédé de cuisson mis en œuvre par un appareil de cuisson selon l'une des revendications 1 à 9, comprenant un mode de fonctionnement dans lequel au moins un parmi le premier organe de chauffe (17) et le deuxième organe de chauffe (19), et l'organe de ventilation sont activés simultanément pour réaliser une fonction de cuisson des aliments disposés dans l'enceinte de cuisson (7), suivi d'un autre mode de fonctionnement dans lequel seulement un parmi le premier organe de chauffe (17) ou le deuxième organe de chauffe (19) est activé et l'organe de ventilation est désactivé pour réaliser une fonction de grillage ou de dorage des aliments disposés dans l'enceinte de cuisson.
